# EUROPÄISCHE PATENTSCHRIFT

(11) **EP 3 220 850 B1**
(45) Veröffentlichungstag und Bekanntmachung des Hinweises auf die Patenterteilung: **05.10.2022**
(21) Anmeldenummer: 15816092.9
(22) Anmeldetag: 20.11.2015
(51) Int. Cl.: A61C 13/00

(54) **VERFAHREN ZUR LAGEPOSITIONIERUNG EINES HALBZEUGES**
METHOD FOR POSITIONING A SEMIFINISHED PRODUCT
PROCÉDÉ DE POSITIONNEMENT D'UN PRODUIT SEMI-FINI

(30) Priorität: 21.11.2014 DE 102014117109
(43) Veröffentlichungstag der Anmeldung: 27.09.2017
(73) Patentinhaber: Merz Dental GmbH, 24321 Lütjenburg (DE)
(72) Erfinder: BOROWSKI, Christian, 24111 Kiel (DE)
(74) Vertreter: Fish & Richardson P.C.
(86) Internationale Anmeldenummer: PCT/EP2015/077183
(87) Internationale Veröffentlichungsnummer: WO 2016/079282

(56) Entgegenhaltungen:
- EP-A2- 1 068 839
- EP-A2- 2 343 025
- DE-A1-102006 052 027
- DE-U1- 20 316 004
- KR-A- 20130 136 081

## Beschreibung

Vorliegende Erfindung betrifft ein Verfahren zur Lagepositionierung eines Halbzeuges, Verfahren zur Herstellung eines Halbzeuges mit reproduzierbarer Lagepositionierung, ein Halbzeug zur reproduzierbaren Lagepositionierung sowie eine entsprechende Verwendung des Halbzeuges.

Bekanntermaßen arbeiten numerisch gesteuerte Fräsmaschinen grundsätzlich mit einem Koordinatensystem, in dem sie sich räumlich bewegen und orientieren. Das entsprechende Koordinatensystem setzt sich aus mehreren Achsen zusammen, beispielsweise fünf Bewegungsachsen in Form von drei Linearachsen und zwei Rotationsachsen. Für die Orientierung der numerisch gesteuerten Fräsmaschine in Bezug zum entsprechenden Halbzeug wird eine absolute oder inkrementelle Wegverfolgung verwendet. Um das Halbzeug kollisionsfrei in der Maschine bearbeiten zu können, müssen räumliche Gegebenheiten hochpräzise bekannt sein. Deshalb ist es von großer Bedeutung, dass das Halbzeug in diesem Koordinatensystem genau definiert sein muss, um eine exakte Bearbeitung an dem Halbzeug vornehmen zu können. Diesbezüglich muss das Halbzeug zu allen Achsen in einer definierten Lage zum Koordinatensystem der Maschine ausgerichtet sein. Je nach Werkstoff und damit einhergehenden physikalischen und chemischen Eigenschaften können bei der Herstellung eines Halbzeuges Dimensionsveränderungen auftreten, die für die anschließende Nachbearbeitung auf einer numerisch gesteuerten Maschine eine aufwändige geometrische Analyse erfordern, um diese im Koordinatensystem der numerischen Maschine zu orientieren. Würde beispielsweise das Halbzeug aus der Fräsmaschine herausgenommen, um z.B. Maßkontrollen durchzuführen, wäre eine Weiter- bzw. Nachbearbeitung des Halbzeuges nur mit erheblichem Aufwand, beispielsweise zur Nachbearbeitung von Referenzmarkierungen, möglich. Umso kritischer ist die reproduzierbare Lagepositionierung innerhalb einer Fräsmaschine bei Halbzeugen, welche als Freiformkörper bei komplexen geometrischen Gegebenheiten wie beispielsweise einem Dentalrohling oder einem Zahn angewandt werden muss.

Hierbei werden derartig auftretende Maßveränderungen über Nullpunktspannsysteme versucht zu lösen. Jedoch ist bei diesem bekannten System der Nachteil gegeben, dass Referenzmarkierungen zum Teil erst nach der Maßveränderung dem Halbzeug nachträglich angebracht wird. Bei diesem nachträglichen Anbringen von Markierungen an ein Halbzeug müssen die geometrischen Gegebenheiten an dem Halbzeug exakt und genau bekannt sein, um einen Bezug zur Position des Nullpunktspannsystems festzulegen. Eine derartige Markierung ist beispielsweise aus der DE 20 2012 100 359 U1 bekannt. Die an dem Halbzeug angebrachten Markierungen reichen aber lediglich als "Verdrehschutz" und sind für eine genaue reproduzierbare Lagepositionierung, insbesondere für eine maschinelle Weiterverarbeitung, ungeeignet, zumal diese Markierungen erst nach der Herstellung des Halbzeugs nachträglich spanend eingebracht werden. Auch enthalten diese Rohlinge keine komplexen Formen oder Strukturen, die es bei einer Weiterverarbeitung zu berücksichtigen gilt.

DE 10 2006 052 027 A1 beschreibt einen zylindrischen Weißling mit Gestaltmerkmalen in Form von zwei umlaufenden Nuten. Die beiden Nuten sind zu den kreisförmigen Flächen des Zylinders benachbart angeordnet. Vor der mechanischen Bearbeitung wird in einer CAD-CAM-Maschine der Abstand der Nuten voneinander gemessen. Aus dem Messergebnis und dem Abstand der beiden Nuten vor einem Sinterprozess wird die Schrumpfung beim Vorsintern und daraus die zu erwartende Schrumpfung beim Sintern berechnet.

EP 1 068 839 A2 beschreibt einen Rohling mit einem Zapfen, der wenigstens ein Referenzelement aufweist, welches bei Einspannen des Zapfens in eine Rohling-Haltevorrichtung mit einem raumfesten Referenzgegenelement den Rohling in Umfangsrichtung genau positionierend zusammenwirkt. Mit dem Referenzelement und dem Referenzgegenelement ist ein räumliches Referenzsystem geschaffen, welches den in die Rohling-Haltevorrichtung eingesetzten Rohling stets in einer genau bestimmten Umfangsrichtung um die Rohlingachse räumlich festlegt, so dass der Rohling während des Herausarbeitens der Dentalprothese aus dem Korpus beliebig oft in die Haltevorrichtung eingesetzt und aus ihr entnommen werden kann, ohne das sich dadurch die räumliche Lage der Dentalprothese verändert.

Es ist somit Aufgabe der vorliegenden Erfindung, die im Stand der Technik genannten Nachteile zu vermeiden. Ferner ist es Aufgabe der vorliegenden Erfindung, für ein sich in der Herstellung sowie in der Weiterverarbeitung befindlichen und in den Maßveränderungen unterworfenen Halbzeuges, eine reproduzierbare Lagepositionierung zu ermöglichen.

Gelöst werden diese Aufgaben verfahrenstechnisch mit den Merkmalen des Anspruchs 1.

Anmeldegemäß wird herstellungsbedingt ein Halbzeug mit zumindest einer zum Schwindungs- bzw. Ausdehnungszentrum ausgerichteten Positionsmarkierung bereitgestellt und bearbeitungsbedingt mit zumindest einer zum Schwindungs- bzw. Ausdehnungszentrum ausgerichteten Positionierungsmarkierung derart in dem Halbzeug vorgesehen, dass eine Nachbearbeitung des Halbzeugs lagepositioniert vorgenommen werden kann.

Anhand der anmeldungsgemäßen Maßnahme mittels zumindest einer Positionsmarkierung, die zum Schwindung- bzw. Ausdehnungszentrum ausgerichtet ist, wird erreicht, dass die Maßveränderungen, die bei der Herstellung des Halbzeuges aufgetreten sind, bei der anschließenden Nachbearbeitung dennoch eine präzise Lagepositionierung in der Bearbeitungsvorrichtung, beispielsweise auf einer Fräsmaschine, ermöglichen. Auf diese Weise ist es beispielsweise möglich, aus einem Halbzeug einen Freiformköper herzustellen, in dem schon vordefinierte Geometrien (z.B. Zähne) integriert sind, um so zu einem späteren Zeitpunkt je nach Materialvorkommen einen weiteren z.B. an die Zähne angrenzenden Freiformkörper herauszutrennen und zwar in der Gestalt, dass die Bearbeitungsmaschine, bzw. das CAM Modul, Kenntnis darüber hat, wo bereits ein Materialabtrag stattgefunden hat bzw. nicht mehr stattfinden muss, weil die geometrischen Gegebenheiten bei der Herstellung des Halbzeuges schon vorgegeben wurden in wieweit ein weiterer angrenzender Freiformkörper aus dem Halbzeug herausgetrennt bzw. herausgearbeitet werden kann. Durch die Einbringung von mindestens einer Positionsmarkierung in das Halbzeug schon während der Herstellung, ist es anmeldungsgemäß somit möglich, die physikalischen und auch chemischen Einflüsse der dimensionalen Veränderung zu kompensieren. Damit ist eine reproduzierbare und lagegenaue Aufnahme des Halbzeuges gewährleistet, um beispielsweise ein maschinelle Nachbearbeitung an einer numerisch gesteuerten Fräsmaschine vornehmen zu können. Eine eventuell aufwendige geometrische Lagebestimmung für ein aus der Bearbeitungsmaschine bzw. Fräsmaschine herausgenommenes Halbezuges ist nicht mehr erforderlich. Auch entfällt das nachträgliche Anbringen einer Positionsmarkierung, wenn das Halbzeug seine endgültige, für die Bearbeitung notwendige Lage eingenommen hat. Mit der anmeldungsgemäßen Maßnahme wird somit der Positionierungsaufwand eines Halbzeuges beispielsweise eines Zahnprothesenrohlings erheblich vereinfacht und somit die Fertigungskosten reduziert.

Weitergehende vorteilhafte Ausgestaltungen der Erfindung sind Gegenstand der Unteransprüche.

Es hat sich als vorteilhaft herausgestellt, dass insbesondere bei einem spanenden Verfahren, welches die Nachbearbeitung vornimmt, die wiederholte und mehrfache Lagepositionierung des Halbzeuges, insbesondere in Form eines Freiformkörpers oder auch Dentalrohlings auf einfache Weise gewährleistet ist.

Die anmeldungsgemäße Einbringung von Lagepositionierung in ein Halbzeug ist insbesondere bei der Herstellung des Halbzeuges von Vorteil, da die dimensionsverändernde Wirkung beim Herstellungsprozess eine Nachbearbeitung problematisch erscheinen lässt.

Ebenso ist es von Vorteil, wenn bei der Nachbearbeitung Schwindungs-, Schrumpfungs- sowie Feuchtigkeitseinflüsse, die bei der Herstellung des Halbzeugs auftreten können, kompensiert werden.

Andererseits hat es sich als vorteilhaft herausgestellt, dass das anmeldungsgemäße Verfahren zur Lagepositionierung auch nach einer Hygroskopizität des Halbzeuges vorteilhafte Anwendungen findet.

Als besonders vorteilhaft hat sich herausgestellt, dass das anmeldungsgemäße Verfahren zur Lagepositionierung bei Volumenänderungen des Halbzeuges in dem Bereich von 0,5% bis 15%, vorzugsweise 1% bis 10%, vorzugsweise 1% oder 10% gegenüber der Bearbeitung des Halbzeuges angewandt wird.

Eine weitere vorteilhafte Ausgestaltung ist gegeben, wenn die Positionsmarkierung formgebunden in dem Halbzeug vorgesehen ist; da dann auch keine weitere Nachbearbeitung der Positionsmarkierung vorgenommen werden muss.

Die als besonders vorteilhafte Form der Positionierungsmarkierung betrifft geometrisch reproduzierbare Formen, wie z. B. Langlöcher, deren Vorzugsrichtung zum Schwindungs- bzw. Ausdehnungszentrum ausgerichtet sind.

Weitere vorteilhafte Ausgestaltungen der Positionsmarkierung sind darin zu sehen, dass die Ausnehmungen bzw. Ausbuchtungen in der Umfangsoberfläche des Halbzeugs gebildet werden und vorzugsweise die Ausnehmungen als Nut oder Auflageflächen ausgebildet sind.

Sind darüber hinaus die Positionsmarkierungen rotationssymmetrisch zum Schwindungs- bzw. Ausdehnungszentrum angeordnet, so ist eine vereinfachte Handhabung in der Bearbeitung- bzw. Fräsmaschine möglich. Eine besondere vorteilhafte Rotationsymmetrie wird dadurch erreicht, wenn drei Positionsmarkierungen vorzugsweise in einem Drehwinkel von 120 Grad vorgesehen sind. Ebenso ist die Rotationsymmetrie von vier Positionsmarkierungen gegeben, die in einem Drehwinkel von 90 Grad angeordnet sind. Weitere vorteilhafte Ausgestaltungen der vorliegenden Erfindung sind Gegenstand der weiteren Unteransprüche. Anhand der nachfolgenden Figuren sollen vorteilhafte Ausgestaltungen der Erfindung exemplarisch wiedergegeben werden.
Figur 1 zeigt die Draufsicht eines anmeldungsgemäßen Halbzeuges als Dentalrohling gemäß einer ersten Ausführungsform.
Figur 2 zeigt die Draufsicht eines anmeldungsgemäßen Halbzeuges als Dentalrohling gemäß einer zweiten Ausführungsform.
Figur 3 zeigt die Draufsicht eines anmeldungsgemäßen Halbzeuges als Dentalrohling gemäß einer dritten Ausführungsform.
Figur 4 zeigt ein kreisrundes bekanntes Halbzeug, welches eine Schrumpfung von 1% aufweist.
Figur 5 zeigt das anmeldungsgemäße Halbzeug als Dentalrohling, welches in einer Bearbeitungsvorrichtung eingebracht ist.

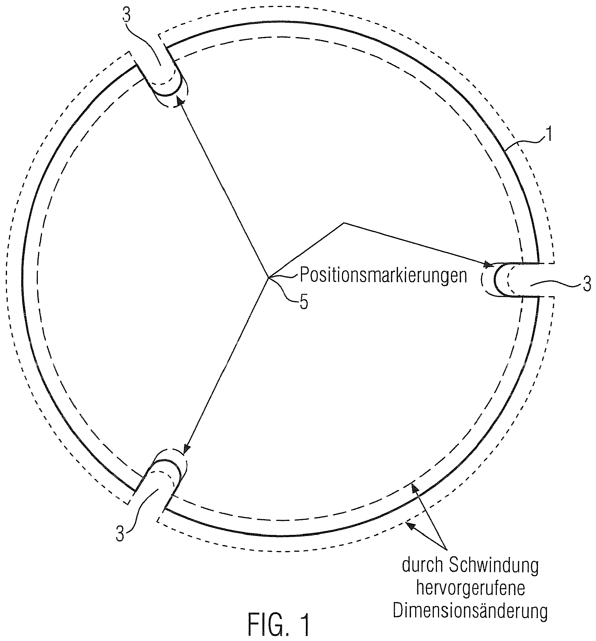

In Figur 1 wird in Draufsicht ein Halbzeug in Kreisform gezeigt, welches als Dentalrohling häufig verwendet wird. In dieser Ausgestaltung sind drei Positionsmarkierungen 3 vorgesehen, die in dieser Ausgestaltung als Ausnehmung in Form einer Nut wiedergegeben sind und in einem Rotationswinkel von 120 Grad beanstandet sind. Deutlich ist zu erkennen, dass die Positionsmarkierungen zum Schwindungs- bzw. Ausdehnungszentrum 5 ausgerichtet sind. In gestrichelter Form sind die Außenmaße des Halbzeugs 1 dargestellt, die in diesem Fall durch Schwindung eine Dimensionsveränderung hervorruft. Deutlich ist zu erkennen, dass die Positionsmarkierungen 3 mit der Schwindung einhergehend zum Schwindungs- bzw. Ausdehnungszentrum ausgerichtet sind. In diesem Fall ist deutlich zu erkennen, dass die besondere Ausgestaltung als Nut eine vereinfachte Form wiedergibt und eine Lagepositionierung vorzugsweise reproduzierbare Lagepositionierung ermöglicht.

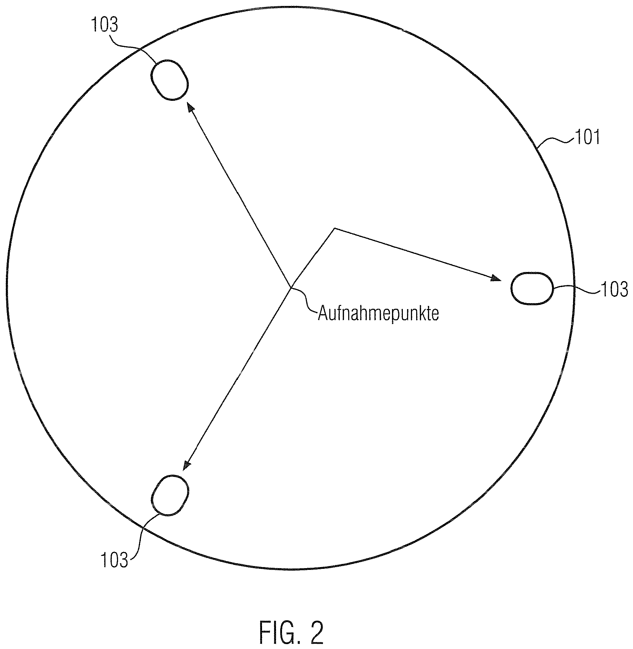

In Figur 2 ist ebenfalls eine weitere Ausgestaltung des Halbzeuges 101 dargestellt, welche weitere Positionsmarkierungen 103 aufweisen. In diesem Fall sind Positionsmarkierungen als Langlöcher dargestellt, die ebenfalls zum Schwindung- bzw. Ausdehnungszentrum ausgerichtet sind.

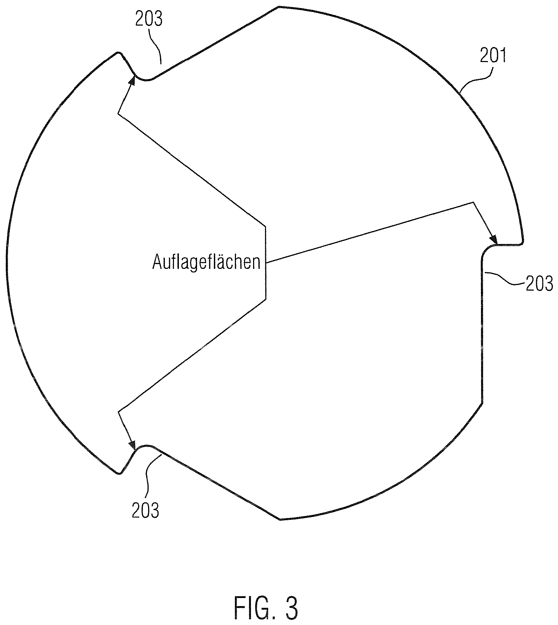

In Figur 3 ist eine weitere Ausgestaltung des anmeldungsgemäßen Halbzeuges 201 wiedergegeben, welches vorzugsweise Ausnehmungen in Form von Auflageflächen 203 als Positionsmarkierungen aufweisen. In der Draufsicht ist erkennbar, dass die Formgebung der Ausnehmungen asymmetrisch ausgestaltet ist, sodass eine bevorzugte Druckpunktlage für die Halterung des Halbzeuges gegeben ist, wobei die Druckpunktlage dann ebenfalls zum Schwindungs- bzw. Ausdehnungsrichtung ausgerichtet ist.

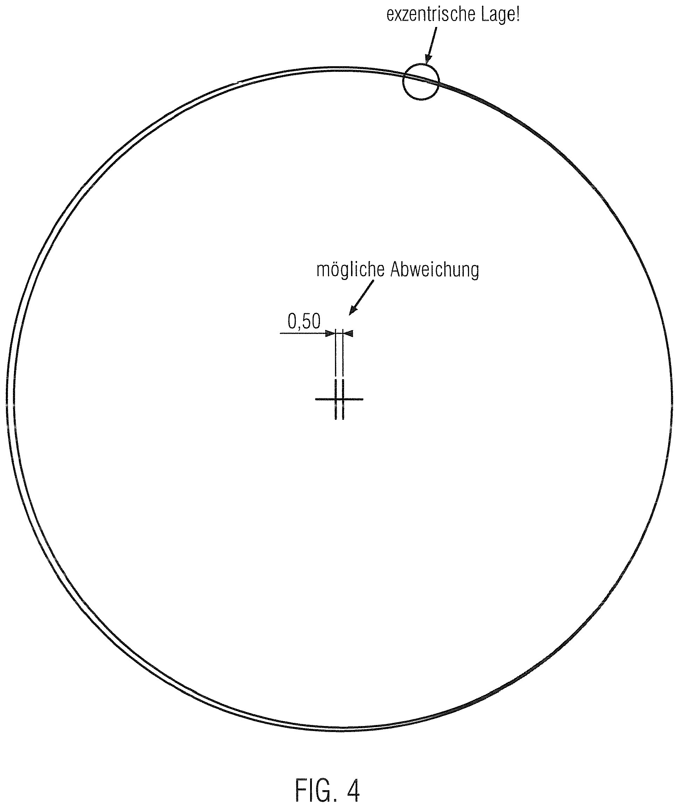

In Figur 4 ist ein bekannter kreisrunder Dentalrohling gezeigt, der bei einer Schrumpfung von 1% und einem Ursprungsdurchmesser von 100 mm eine mögliche Durchmesserabweichung von 1 mm aufzeigt. Dies hat zur Folge, dass die maximal mögliche Positionsabweichung zum Mittelpunkt 0,5 mm betragen kann, und somit eine Lageverschiebung in der Bearbeitungsvorrichtung von erheblichem Maße vorliegt, insbesondere wenn die Bearbeitung des Dentalrohlings im Ursprungsdurchmesser vorgenommen wird und gegebenenfalls die Nachbearbeitung des Dentalrohlings nach einem Schwindungs- oder Schrumpfungsprozess von 1% durchzuführen ist. Eine für den Dentalbereich notwendige exakte Lagepositionierung ist somit nicht möglich.

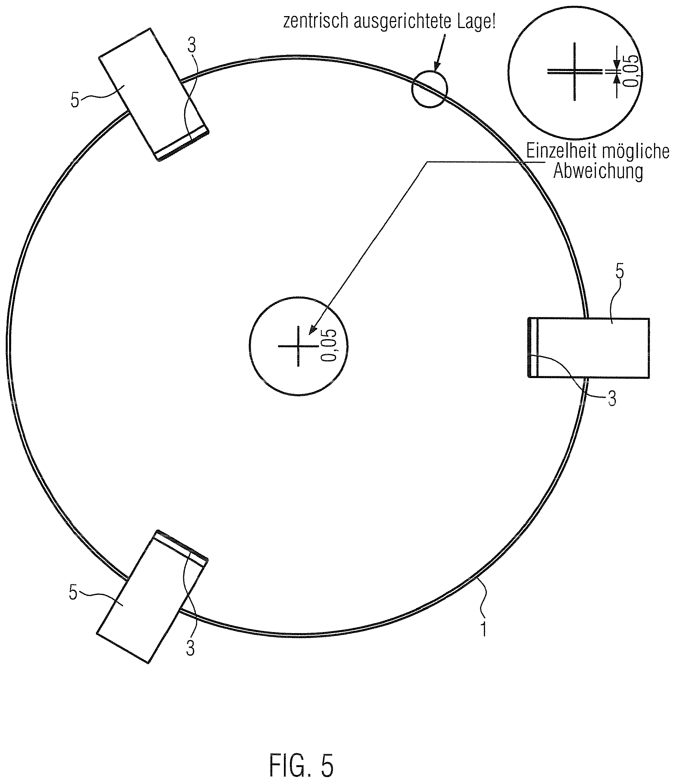

In Figur 5 ist ein Anwendungsbeispiel mit Maßgabe für das anmeldungsgemäße Halbzeug 1 mit Positionsmarkierungen 3 dargestellt, die über Befestigungsmittel 5 in einer Bearbeitungsvorrichtung positioniert sind. Wird im anmeldungsgemäßen Fall der Dentalrohling nach einem Schwindung- oder Schrumpfungsprozess von 1% wieder über die Positionsmarkierung 3 und einem Befestigungsmittel 5 in die Bearbeitungsvorrichtung eingelegt, so können selbst die im Schwindungszentrum auftretenden Fehler, in diesem Fall von 0,05 mm, ebenso kompensiert werden, sodass eine um einen Faktor 10 erhöhte Lagegenauigkeit gegenüber bisherigen Nachbearbeitungsmethoden herbeigeführt wird. Dies wird erfindungsgemäß durch die Positionsmarkierungen 3 erreicht, die in Schwindungsrichtung eingebracht sind und die nur ca. 10 mm groß sind. Reduziert sich die Abweichung bei 1% Schwindung auf 0,1 mm, so ist die Positionsabweichung zum Mittelpunkt dann nur noch 0,05 mm.

Die anmeldungsgemäße Einbringung der Positionsmarkierungen kompensiert somit diesen Wert in der Bearbeitungsvorrichtung, weil die Schwindung am Halbzeug bei dem kleineren Maß der Positionsmarkierung und der erfindungsgemäß vorgesehenen Geometrie viel besser berechenbar ist. Die Positionsabweichung kann diesbezüglich mindestens auf 0,25 mm also nochmals halbiert werden.

## Patentansprüche

1. Verfahren, welches die Schritte aufweist:
Bereitstellen eines Halbzeugs umfassend mehrere mit einer Schwindung bzw. Ausdehnung einhergehende und mit einem Schwindungs- bzw.
Ausdehnungszentrum ausgerichtete Positionsmarkierungen, die bzgl. des Schwindungs- bzw. Ausdehnungszentrums rotationssymmetrisch angeordnet sind,
Herbeiführen einer Volumenänderung des Halbzeugs,
Bereitstellen einer Bearbeitungsvorrichtung zum Bearbeiten des Halbzeugs,
Einlegen des Halbzeugs nach der Volumenänderung in die Bearbeitungsvorrichtung anhand der Positionsmarkierungen und Befestigungsmittel der Bearbeitungsvorrichtung, und
Nachbearbeiten des Halbzeugs.

2. Verfahren nach Anspruch 1, **dadurch gekennzeichnet, dass** die Nachbearbeitung ein spanloses oder spanendes Verfahren beinhaltet.

3. Verfahren nach einem der Ansprüche 1 oder 2, **dadurch gekennzeichnet, dass** die Nachbearbeitung nach einer Wärmebehandlung des Halbzeugs erfolgt, die die Volumenänderung des Halbzeugs herbeiführt.

4. Verfahren nach einem der Ansprüche 1 oder 2, **dadurch gekennzeichnet, dass** die Nachbearbeitung nach einem Feuchtigkeitsentzug des Halbzeugs erfolgt, der die Volumenänderung des Halbzeugs herbeiführt.

5. Verfahren nach einem der Ansprüche 1 oder 2, **dadurch gekennzeichnet, dass** die Nachbearbeitung nach einer Hygroskopizität des Halbzeugs erfolgt, die die Volumenänderung des Halbzeugs herbeiführt.

6. Verfahren nach Anspruch 3, 4, oder 5, **dadurch gekennzeichnet, dass** die Volumenveränderung des Halbzeugs in Folge der Wärmebehandlung, des Feuchtigkeitsentzugs bzw. der Hygroskopizität von 0,5 % bis 15% beträgt.

7. Verfahren nach Anspruch 6, **dadurch gekennzeichnet, dass** die Volumenveränderung des Halbzeugs 1% bis 10% beträgt.

8. Verfahren nach einem der vorhergehenden Ansprüche, **dadurch gekennzeichnet, dass** die Positionsmarkierungen formgebunden in dem Halbzeug vorgesehen sind.

9. Verfahren nach einem der vorhergehenden Ansprüche, **dadurch gekennzeichnet, dass** nach einer Wärmebehandlung, Hygroskopizität, oder einem Feuchtigkeitsentzug keine weitere Nachbearbeitung der Positionsmarkierungen vorgenommen wird.

10. Verfahren nach einem der vorhergehenden Ansprüche, **dadurch gekennzeichnet, dass** die Positionsmarkierungen in Form von geometrisch reproduzierbaren Formen, vorzugsweise Langlöcher, ausgebildet sind, deren Vorzugsrichtung zum Schwindungs- bzw. Ausdehnungszentrum ausgerichtet sind.

11. Verfahren nach einem der vorhergehenden Ansprüche, **dadurch gekennzeichnet, dass** die Positionsmarkierungen Ausnehmungen bzw. Ausbuchtungen in der Umfangsoberfläche des Halbzeugs bilden.

12. Verfahren nach Anspruch 11, **dadurch gekennzeichnet, dass** die Ausnehmungen als Nut oder Auflageflächen ausgebildet sind.

13. Verfahren nach einem der vorhergehenden Ansprüche, **dadurch gekennzeichnet, dass** 3 Positionsmarkierungen in einem Drehwinkel von 120 Grad vorgesehen sind.

14. Verfahren nach einem der vorhergehenden Ansprüche, **dadurch gekennzeichnet, dass** 4 Positionsmarkierungen in einem Drehwinkel von 90 Grad vorgesehen sind.

15. Verfahren nach einem der vorhergehenden Ansprüche **dadurch gekennzeichnet, dass** das Halbzeug Freiformkörper, vorzugsweise eines Dentalrohlings, ist.

## Claims

1. Method having the steps of:
providing a semifinished product comprising a plurality of position marks associated with a contraction or expansion and aligned with a centre of contraction or expansion, which are arranged with rotational symmetry with respect to the centre of contraction or expansion,
bringing about a change in volume of the semifinished product,
providing a machining apparatus for machining the semifinished product, placing the semifinished product into the machining apparatus after the change in volume on the basis of the position marks and fastening means of the machining apparatus, and
finishing the semifinished product.

2. Method according to Claim 1, **characterized in that** the finishing includes a non-cutting or cutting process.

3. Method according to either of Claims 1 and 2, **characterized in that** the finishing takes place after a heat treatment of the semifinished product which brings about the change in volume of the semifinished product.

4. Method according to either of Claims 1 and 2, **characterized in that** the finishing takes place after a removal of moisture from the semifinished product which brings about the change in volume of the semifinished product.

5. Method according to either of Claims 1 and 2, **characterized in that** the finishing takes place after a hygroscopicity of the semifinished product which brings about the change in volume of the semifinished product.

6. Method according to Claim 3, 4 or 5, **characterized in that** a change in volume of the semifinished product due to the heat treatment, the removal of moisture or the hygroscopicity is from 0.5% to 15%.

7. Method according to Claim 6, **characterized in that** the change in volume of the semifinished product is 1% to 10%.

8. Method according to one of the preceding claims, **characterized in that** the position marks are provided in form-bound fashion in the semifinished product.

9. Method according to one of the preceding claims, **characterized in that** no further finishing of the position marks is performed after a heat treatment, hygroscopicity or a removal of moisture.

10. Method according to one of the preceding claims, **characterized in that** the position marks are in the form of geometrically reproducible forms, preferably elongate holes, the preferential direction of which is aligned with the centre of contraction or expansion.

11. Method according to one of the preceding claims, **characterized in that** the position marks form cutouts or projections in the peripheral surface of the semifinished product.

12. Method according to Claim 11, **characterized in that** the cutouts are in the form of a groove or placement surfaces.

13. Method according to one of the preceding claims, **characterized in that** 3 position marks are provided in a rotation angle of 120 degrees.

14. Method according to one of the preceding claims, **characterized in that** 4 position marks are provided in a rotation angle of 90 degrees.

15. Method according to one of the preceding claims, **characterized in that** the semifinished product is a freeform body, preferably of a dental blank.

## Revendications

1. Procédé comprenant les étapes suivantes :
fournir un produit semi-fini comprenant une pluralité de repères de position qui ont liés à un retrait ou à une dilatation et alignés avec un centre de retrait ou de dilatation et qui sont disposés à symétrie de rotation par rapport au centre de retrait ou de dilatation,
générer un changement de volume du produit semi-fini,
fournir un dispositif de traitement destiné à traiter le produit semi-fini,
insérer le produit semi-fini dans le dispositif de traitement après le changement de volume à l'aide des repères de position et de moyens de fixation du dispositif de traitement, et
soumettre le produit semi-fini à un post-traitement.

2. Procédé selon la revendication 1, **caractérisé en ce que** le post-traitement inclut un procédé avec ou sans enlèvement de copeaux.

3. Procédé selon l'une des revendications 1 et 2, **caractérisé en ce que** le post-traitement est réalisé après avoir soumis le demi-produit à un traitement thermique qui génère le changement de volume du demi-produit.

4. Procédé selon l'une des revendications 1 et 2, **caractérisé en ce que** le post-traitement est réalisé après avoir éliminé l'humidité du produit semi-fini, ce qui génère le changement de volume du produit semi-fini.

5. Procédé selon l'une des revendications 1 et 2, **caractérisé en ce que** le post-traitement est réalisé après une hygroscopicité du demi-produit, ce qui génère le changement de volume du demi-produit.

6. Procédé selon la revendication 3, 4 ou 5, **caractérisé en ce que** le changement de volume du produit semi-fini à la suite du traitement thermique, de l'élimination de l'humidité ou de l'hygroscopicité est de 0,5 % à 15 %.

7. Procédé selon la revendication 6, **caractérisé en ce que** le changement de volume du produit semi-fini est de 1 % à 10 %.

8. Procédé selon l'une des revendications précédentes, **caractérisé en ce que** les repères de position sont prévus dans un produit semi-fini conformément à la forme.

9. Procédé selon l'une des revendications précédentes, **caractérisé en ce qu'**aucun autre post-traitement des repères de position n'est effectué après le traitement thermique, l'hygroscopicité ou l'élimination de l'humidité.

10. Procédé selon l'une des revendications précédentes, **caractérisé en ce que** les repères de position sont conçus sous la forme de formes géométriquement reproductibles, de préférence des trous allongés, dont la direction préférentielle est alignée sur le centre de retrait ou de dilatation.

11. Procédé selon l'une des revendications précédentes, **caractérisé en ce que** les repères de position forment des évidements ou des renflements dans la surface périphérique du produit semi-fini.

12. Procédé selon la revendication 11, **caractérisé en ce que** les évidements sont ménagés sous la forme de gorge ou de surfaces d'appui.

13. Procédé selon l'une des revendications précédentes, **caractérisé en ce que** 3 repères de position sont prévus suivant un angle de rotation de 120 degrés.

14. Procédé selon l'une des revendications précédentes, **caractérisé en ce que** 4 repères de position sont prévus suivant un angle de rotation de 90 degrés.

15. Procédé selon l'une des revendications précédentes, **caractérisé en ce que** le produit semi-fini est un corps de forme libre, de préférence une ébauche dentaire.
